# EUROPÄISCHE PATENTANMELDUNG

(11) **EP 0 688 817 A1**
(43) Veröffentlichungstag der Anmeldung: **27.12.1995**
(21) Anmeldenummer: 95109317.8
(22) Anmeldetag: 16.06.1995
(51) Int. Cl.: C08K 5/103

(54) **Mit ungesättigten Estern teilvernetzte Polypropylen-Massen**

(30) Priorität: 24.06.1994 DE 4422164; 24.06.1994 DE 4422165; 23.06.1994 DE 4421929; 22.12.1994 DE 4445853
(71) Anmelder: BASF Aktiengesellschaft, D-67063 Ludwigshafen (DE)
(72) Erfinder: Marczinke, Bernd Lothar, Dr., D-67346 Speyer (DE); Hingmann, Roland, Dr., D-68526 Ladenburg (DE); Kölle, Peter, dr., D-67098 Bad Dürkheim (DE); Müller, Hans Joachim, Dr., F-67269 Grünstadt (DE); Seelert, Stefan, Dr., D-67227 Frankenthal (DE); Schwager, Harald, Dr., D-67346 Speyer (DE); Hofmann, Jürgen, D-67069 Ludwigshafen (DE); Reich, Wolfgang, Dr., D-67133 Maxdorf (DE)

(57) **Zusammenfassung**

Teilvernetzte Kunststoffmassen mit einem Schmelzflußindex von 0,1 bis 100 g/10 min., bei 230°C und unter einem Gewicht von 2,16 kg, aus
a₁) einem Polymerisat aus 25 bis 97 Gew.-% eines Propylencopolymerisats (I), das 0,1 bis 15 Gew.-% an einpolymerisierten C₂-C₁₀-Alk-1-enen enthält und aus 3 bis 75 Gew.-% eines weiteren Propylencopolymerisats (II), das 15 bis 80 Gew.-% an einpolymerisierte C₂-C₁₀-Alk-1-enen aufweist, oder
a₂) einem Polymerisat aus 25 bis 97 Gew.-% eines Propylenhomopolymerisats und 3 bis 75 Gew.-% eines Propylencopolymerisats mit einpolymerisierten C₂-C₁₀-Alk-1-enen, wobei der Comonomerengehalt 15 bis 80 Gew.-%, bezogen auf die letztere Komponente beträgt, oder
a₃) einem Propylenhomopolymerisat mit einem Schmelzflußindex von 0,01 bis 100 g/10 min, bei 230°C und unter einem Gewicht von 2,16 kg oder
a₄) einem statistischen Propylencopolymerisat mit einpolymerisierten C₂-C₁₀-Alk-1-enen, wobei der Comonomerengehalt weniger als 15 Gew.-% beträgt und
b) einer Verbindung der folgenden allgemeinen Formel (I) 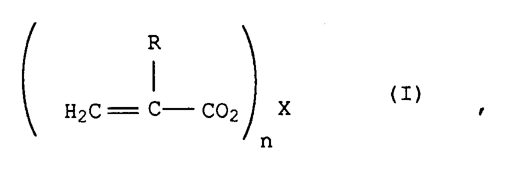 wobei
   - R: für Wasserstoff oder für eine C₁-C₄-Alkylgruppe steht,
   - X: eine C₁-C₃₀-Alkylgruppe oder eine C₇-C₃₀-Arylalkylgruppe bedeutet, die von einem oder mehreren Sauerstoffatomen und/oder Stickstoffatomen unterbrochen sein kann und
   - n: der Zahl 2 oder 3 entspricht,
   erhältlich durch Umsetzung des Polymerisats a₁), a₂), a₃) oder a₄) mit der Verbindung b) bei Temperaturen von 180 bis 280°C, Drücken von 1 bis 100 bar und mittleren Verweilzeiten des Reaktionsgemisches von 0,2 bis 10 Minuten.

## Beschreibung

Die vorliegende Erfindung betrifft teilvernetzte Kunststoffmassen mit einem Schmelzflußindex von 0,1 bis 100 g/10 min., bei 230°C und unter einem Gewicht von 2,16 kg, aus
a₁) einem Polymerisat aus 25 bis 97 Gew.-% eines Propylencopolymerisats (I), das 0,1 bis 15 Gew.-% an einpolymerisierten C₂-C₁₀-Alk-1-enen enthält und aus 3 bis 75 Gew.-% eines weiteren Propylencopolymerisats (II), das 15 bis 80 Gew.-% einpolymerisierte C₂-C₁₀-Alk-1-ene aufweist, oder
a₂) einem Polymerisat aus 25 bis 97 Gew.-% eines Propylenhomopolymerisats und 3 bis 75 Gew.-% eines Propylencopolymerisats mit einpolymerisierten C₂-C₁₀-Alk-1-enen, wobei der Comonomerengehalt 15 bis 80 Gew.-%, bezogen auf die letztere Komponente beträgt, oder
a₃) einem Propylenhomopolymerisat mit einem Schmelzflußindex von 0,01 bis 100 g/10 min, bei 230°C und unter einem Gewicht von 2,16 kg oder
a₄) einem statistischen Propylencopolymerisat mit einpolymerisierten C₂-C₁₀-Alk-1-enen, wobei der Comonomerengehalt weniger als 15 Gew.-% beträgt und
b) einer Verbindung der folgenden allgemeinen Formel (I) 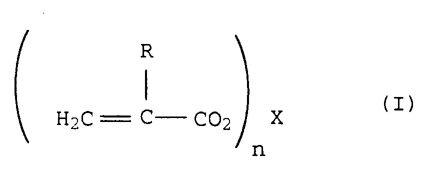 wobei
   - R: für Wasserstoff oder für eine C₁-C₄-Alkylgruppe steht,
   - X: eine C₁-C₃₀-Alkylgruppe oder eine C₇-C₃₀-Arylalkylgruppe bedeutet, die von einem oder mehreren Sauerstoffatomen und/oder Stickstoffatomen unterbrochen sein kann und
   - n: der Zahl 2 oder 3 entspricht,
   erhältlich durch Umsetzung des Polymerisats a₁), a₂), a₃) oder a₄) mit der Verbindung b) bei Temperaturen von 180 bis 280°C, Drücken von 1 bis 100 bar und mittleren Verweilzeiten des Reaktionsgemisches von 0,2 bis 10 Minuten.

Außerdem betrifft die vorliegende Erfindung ein Verfahren zur Herstellung von teilvernetzten Kunststoffmassen, sowie Folien, Fasern und Formkörper aus diesen Kunststoffmassen.

Vernetzte Polymerisate weisen gegenüber nicht vernetzten Polymerisaten den Vorteil einer höheren mechanischen Stabilität auf. Vollständig vernetzte Materialien lassen sich aber aufgrund ihres geringen Schmelzflusses thermisch nicht mehr mit den in der Kunststofftechnik üblichen Methoden verformen (H.G. Elias, "Makromoleküle", Verlag Hüthig & Wepf, 4. Auflage, Seite 1 000 bis 1 003). Für die Verarbeitung von Polymerisaten ist es deshalb notwendig, darauf zu achten, daß der Vernetzungsgrad der Polymerisate nicht zu hoch liegt, so daß diese noch mit den in der Kunststofftechnik üblichen Apparaturen verformt werden können.

Es ist bekannt, Polymerisate des Propylens mit ungesättigten Silanen in Gegenwart eines Kondensationskatalysators und eines Peroxids zu vernetzen (DE-A 33 27 149 und DE-A 35 20 106). Die dabei erhaltenen Polymerisate zeichnen sich u.a. durch eine hohe Kälteschlagzähigkeit und Formbeständigkeit aus. Die Vernetzung mit Hilfe ungesättigter Silane ist jedoch verfahrenstechnisch relativ aufwendig, da in diesem Fall drei verschiedene Komponenten, das Silan, der Katalysator und das Peroxid eingesetzt werden müssen.

Kautschuke auf der Basis von Ethylen und Propylen können auch mittels Bismaleinimidoverbindungen vernetzt werden, vorausgesetzt, daß radikalisch zerfallende Initiatoren (DE-A 42 19 860; P.O. Towney et al: J. Appln. Polym. Sci. 8, 2281ff (1964)) mitverwendet werden oder energiereiche Strahlung (siehe S.M. Miller et al: J. Polym. Sci. 58, 737 (1962)) die Reaktion initiiert. Bei diesen Verfahren beobachtet man gelegentlich einen Molmassenabbau, der die mechanischen Eigenschaften der Produkte deutlich verschlechtert. Darüber hinaus wird bei den daraus erhaltenen Produkten häufig festgestellt, daß diese verfärbt sind.

Weiterhin ist bekannt, Kautschuke mit mehrwertigen Metallsalzen der Acrylsäure oder der Methacrylsäure in Gegenwart von radikalischen Initiatoren zu vernetzen. Die US-A 4 857 571 beschreibt beispielsweise ein Verfahren, nach welchem Kautschuke auf Basis von Propylen und Ethylen, Nitrilkautschuke oder Fluorkautschuke mit Zinkdimethacrylat in Gegenwart von phenolischen Vulkanisationsinhibitoren mit Hilfe von organischen Peroxiden vernetzt werden. In der US-A 4 713 409 werden Copolymerisate des Propylens und Ethylens oder Nitrilkautschuke in Gegenwart von Füllstoffen mit Zinkdimethacrylat vernetzt, wobei die Reaktion durch den Zerfall von organischen Peroxiden katalysiert wird. Terpolymerisate aus Ethylen, Propylen und Dienen lassen sich ebenfalls mit Zinkdimethacrylaten vernetzen (EP-A 390012). Die Vernetzung derartiger Terpolymerisate aus Ethylen, Propylen und Dienen mit Zinkdimethacrylaten kann auch durch Gammastrahlung oder Elektronenstrahlung initiiert werden. Bei diesen Verfahren hat es sich aber als nachteilig erwiesen, daß dabei relativ hohe Vernetzermengen verwendet werden müssen. Darüber hinaus sind diese Verfahren häufig technisch aufwendig.

Polyolefine können auch mit Peroxiden unter Zusatz von Acrylaten oder Methacrylaten mehrwertiger Alkohole vernetzt werden. So beschreibt beispielsweise die JP-A 41/30 106 ein Verfahren zur Herstellung von thermoplastischen Elastomeren, nach welchem Mischungen aus Polyolefinen und Kautschuken in Gegenwart von Peroxiden mit Acrylaten wie Trimethylolpropantriacrylat umgesetzt werden. Die dabei erhaltenen Produkte sind aber hochvernetzt und weisen einen Gelgehalt, eine Maßzahl für den Grad der Vernetzung, von größer oder gleich 100 %, bezogen auf den Kautschukgehalt, auf. Auch in der JP-A 63/142 056 wird ein Verfahren zur Vernetzung von thermoplastischen Elastomeren mit Hilfe von Triacrylaten beschrieben, bei welchem die erhaltenen Produkte ebenfalls Gelgehalte von mindestens 20 % aufweisen.

Bei diesen Verfahren hat es sich aber als nachteilig erwiesen, daß relativ hohe Vernetzermengen eingesetzt werden müssen und daß die daraus erhaltenen Materialien vollständig vernetzt sind, d.h. hohe Gelgehalte aufweisen, was zur Folge hat, daß sie nur schwer verarbeitet werden können.

Der vorliegenden Erfindung lag daher die Aufgabe zugrunde, den geschilderten Nachteilen abzuhelfen und teilvernetzte Kunststoffmassen mit guten anwendungstechnischen Eigenschaften und möglichst geringen Gelgehalten zu entwickeln, die nach einem wenig aufwendigen Verfahren hergestellt werden können, wobei die Menge des dabei eingesetzten Vernetzers begrenzt werden kann.

Demgemäß wurden die eingangs definierten, teilvernetzten Kunststoffmassen gefunden.

Die erfindungsgemäßen teilvernetzten Kunststoffmassen weisen einen Schmelzflußindex von 0,1 bis 100 g/10 min., bei 230°C und unter einem Gewicht von 2,16 kg, auf. Der Schmelzflußindex entspricht dabei der Menge an Polymerisat, die innerhalb von 10 Minuten aus der nach DIN 53 735 genormten Prüfvorrichtung bei einer Temperatur von 230°C und unter einem Gewicht von 2,16 kg ausgepreßt wird. Besonders bevorzugt sind dabei solche teilvernetzten Kunststoffmassen, deren Schmelzflußindex 0,1 bis 50 g/10 min, bei 230°C und unter einem Gewicht von 2,16 kg, beträgt.

Die erfindungsgemäßen teilvernetzten Kunststoffmassen enthalten zum einen ein Polymerisat a₁) aus 25 bis 97 Gew.-% eines Propylencopolymerisats (I), das 0,1 bis 15 Gew.-% an einpolymerisierten C₂-C₁₀-Alk-1-enen enthält und aus 3 bis 75 Gew.-% eines weiteren Propylencopolymerisats (II), das 15 bis 80 Gew.-% einpolymerisierte C₂-C₁₀-Alk-1-ene aufweist. Bevorzugt sind dabei solche Kunststoffmassen, deren Polymerisat a₁) 35 bis 95 Gew.-% eines Propylencopolymerisats (I) mit 0,2 bis 12 Gew.-% einpolymerisierter C₂-C₁₀-Alk-1-ene und 5 bis 65 Gew.-% eines Propylencopolymerisats (II) mit 20 bis 75 Gew.-% einpolymerisierter C₂-C₁₀-Alk-1-ene enthält. Unter diesen Kunststoffmassen werden solche besonders bevorzugt eingesetzt, deren Polymerisat a₁) aus 40 bis 93 Gew.-% eines Propylencopolymerisats (I) mit 0,3 bis 9 Gew.-% einpolymerisierter C₂-C₁₀-Alk-1-ene und aus 7 bis 60 Gew.-% eines Propylencopolymerisats (II) mit 25 bis 70 Gew.-% einpolymerisierter C₂-C₁₀-Alk-1-ene besteht.

Unter einpolymerisierten C₂-C₁₀-Alk-1-enen sind in diesem Zusammenhang insbesondere Ethylen, But-1-en, Pent-1-en, Hex-1-en, Hept-1-en oder Oct-1-en oder Gemische aus diesen Comonomeren zu verstehen, wobei bevorzugt Ethylen oder But-1-en eingesetzt werden.

Die Herstellung des erfindungsgemäß zu verwendenden Polymerisats a₁) kann in den üblichen, für die Polymerisation von Propylen verwendeten Reaktoren entweder absatzweise oder bevorzugt kontinuierlich durchgeführt werden. Geeignete Reaktoren sind u.a. kontinuierlich betriebene Rührkessel, wobei man auch eine Reihe von mehreren hintereinander geschalteten Rührkesseln einsetzen kann. Die Reaktoren enthalten ein Festbett aus feinteiligem Polymerisat, welches üblicherweise durch Rühren in Bewegung gehalten wird.

Das Verfahren kann mit den in der Polymerisationstechnik üblichen Ziegler-Natta-Katalysatoren sowohl in der Gasphase, als auch in einer Aufschlämmung oder in einer Lösung durchgeführt werden. Diese enthalten u.a. neben einer titanhaltigen Feststoffkomponente noch Cokatalysatoren. Als Cokatalysatoren kommen dabei Aluminiumverbindungen zusammen mit Elektronendonorverbindungen in Frage.

Zur Herstellung der titanhaltigen Feststoffkomponente werden als Titanverbindungen im allgemeinen Halogenide oder Alkoholate des drei- oder vierwertigen Titans verwendet, wobei die Chloride des Titans, insbesondere Titantetrachlorid, bevorzugt sind. Vorteilhaft enthält die titanhaltige Feststoffkomponente einen feinteiligen Träger, wofür sich Silicium- und Aluminiumoxide, sowie Aluminiumsilicate der Bruttoformel SiO₂ · aAl₂O₃, wobei a für einen Wert von 0,001 bis 2, insbesondere von 0,01 bis 0,5 steht, gut bewährt haben.

Die bevorzugt verwendeten Träger weisen einen Teilchendurchmesser von 0,1 bis 1000 µm, insbesondere von 10 bis 300 µm, ein Porenvolumen von 0,1 bis 10 cm³/g, insbesondere von 1,0 bis 5,0 cm³/g und eine spezifische Oberfläche von 10 bis 1000 m²/g, insbesondere von 100 bis 500 m2/g auf.

Weiter werden bei der Herstellung der titanhaltigen Feststoffkomponente u.a. Verbindungen des Magnesiums eingesetzt. Als solche kommen insbesondere Magnesiumhalogenide, Magnesiumalkyle und Magnesiumaryle, sowie Magnesiumalkoxy- und Magnesiumaryloxyverbindungen in Betracht, wobei bevorzugt Magnesiumdichlorid, Magnesiumdibromid und Magnesiumdi- (C₁-C₁₀-alkyl)-Verbindungen verwendet werden. Daneben kann die titanhaltige Feststoffkomponente noch Halogen, bevorzugt Chlor oder Brom, enthalten.

Außerdem enthält die titanhaltige Feststoffkomponente in der Regel noch Elektronendonorverbindungen, beispielsweise mono- oder polyfunktionelle Carbonsäuren, Carbonsäureanhydride und Carbonsäureester, Ketone, Ether, Alkohole, Lactone, sowie Phosphor- und siliciumorganische Verbindungen. Bevorzugt werden als Elektronendonorverbindungen innerhalb der titanhaltigen Feststoffkomponente Phthalsäurederivate der allgemeinen Formel (II) 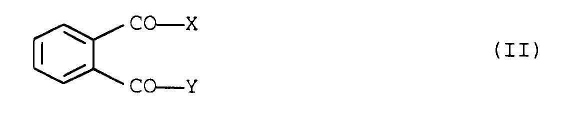
verwendet, wobei X und Y jeweils für Chlor oder einen C₁- bis C₁₀-Alkoxyrest oder gemeinsam für Sauerstoff stehen. Besonders bevorzugte Elektronendonorverbindungen sind Phthalsäureester, wobei X und Y C₁-C₈-Alkoxyreste, beispielsweise Methoxy-, Ethoxy-, Propyloxy- oder Butyloxyreste bedeuten.

Weiter bevorzugte Elektronendonorverbindungen innerhalb der titanhaltigen Feststoffkomponente sind u.a. Diester von 3- oder 4-gliedrigen, gegebenenfalls substituierten Cycloalkyl-1,2-di-carbonsäuren, sowie Monoester von, gegebenenfalls substituierten Benzophenon-2-carbonsäuren. Als Hydroxyverbindungen werden bei diesen Estern die bei Veresterungsreaktionen üblichen Alkohole verwendet, u.a. C₁- bis C₁₅-Alkanole, C₅- bis C₇-Cycloalkanole, die ihrerseits C₁- bis C₁₀-Alkylgruppen tragen können, ferner Phenole, Naphthole sowie die C₁-C₁₀-Alkylderivate dieser Verbindungen.

Die titanhaltige Feststoffkomponente kann nach an sich bekannten Methoden hergestellt werden. Beispiele dafür sind u.a. in der EP-A 45 975, der EP-A 86 473, der EP-A 171 200, der GB-A 2 111 066 und der US-A 4 857 613 beschrieben.

Bei der Herstellung der titanhaltigen Feststoffkomponente wird bevorzugt das nachstehende dreistufige Verfahren angewandt.

In der ersten Stufe versetzt man zunächst einen feinteiligen Träger, bevorzugt Siliciumdioxid oder SiO₂ · aAl₂O₃ mit einem Wassergehalt von 0,5 bis 5 Gew.-% - wobei a für eine Zahl im Bereich von 0,001 bis 2, insbesondere im Bereich von 0,01 bis 0,5 steht - mit einer Lösung der magnesiumhaltigen Verbindung in einem flüssigen Alkan, wonach man dieses Gemisch 0,5 bis 5 Stunden lang bei einer Temperatur zwischen 10 und 120°C rührt.

Vorzugsweise setzt man pro Mol des Trägers 0,1 bis 1 mol der Magnesiumverbindung ein. Anschließend fügt man unter ständigem Rühren ein Halogen oder einen Halogenwasserstoff, insbesondere Chlor oder Chlorwasserstoff im wenigstens zweifachen, bevorzugt im wenigstens fühffachen molaren Überschuß, bezogen auf die magnesiumhaltige Verbindung, hinzu. Nach etwa 30 bis 120 Minuten trennt man den Feststoff von der flüssigen Phase ab.

In der zweiten Stufe bringt man das auf diese Weise erhaltene Produkt in ein flüssiges Alkan ein und fügt danach ein C₁- bis C₈-Alkanol, insbesondere Ethanol, ein Halogenid oder ein Alkoholat des drei- oder vierwertigen Titans, insbesondere Titantetrachlorid, sowie eine Elektronendonorverbindung, insbesondere ein Phthalsäurederivat der allgemeinen Formel (II) hinzu. Dabei setzt man pro Mol Magnesium des aus der ersten Stufe erhaltenen Feststoffs 1 bis 5 mol, insbesondere 2 bis 4 mol, Alkanol, 2 bis 20 mol, insbesondere 4 bis 10 mol, des drei- oder vierwertigen Titans und 0,01 bis 1 mol, insbesondere 0,1 bis 1,0 mol, der Elektronendonorverbindung ein. Dieses Gemisch wird wenigstens eine Stunde lang bei einer Temperatur zwischen 10 und 150°C gerührt, der so erhaltene feste Stoff anschließend abfiltriert und mit einem flüssigen Alkan, bevorzugt mit Hexan oder Heptan, gewaschen.

In der dritten Stufe extrahiert man den aus der zweiten Stufe erhaltenen Feststoff einige Stunden lang bei Temperaturen zwischen 100 und 150°C mit überschüssigem Titantetrachlorid oder einer im Überschuß vorliegenden Lösung von Titantetrachlorid in einem inerten Lösungsmittel, vorzugsweise einem Alkylbenzol, wobei das Lösungsmittel wenigstens 5 Gew.-% Titantetrachlorid enthält. Danach wäscht man das Produkt solange mit einem flüssigen Alkan, bis der Gehalt der Waschflüssigkeit an Titantetrachlorid weniger als 2 Gew.-% beträgt.

Die auf diese Weise erhältliche titanhaltige Feststoffkomponente wird mit Cokatalysatoren als Ziegler-Natta-Katalysatorensystem verwendet. Als Cokatalysatoren kommen dabei Aluminiumverbindungen und Elektronendonorverbindungen in Betracht.

Geeignete Aluminiumverbindungen sind neben Trialkylaluminium auch solche Verbindungen, bei denen eine Alkylgruppe durch eine Alkoxygruppe oder durch ein Halogenatom, beispielsweise durch Chlor oder Brom, ersetzt ist.

Bevorzugt werden Trialkylaluminiumverbindungen verwendet, deren Alkylgruppen jeweils 1 bis 8 C-Atome aufweisen, beispielsweise Trimethyl-, Triethyl- oder Methyldiethylaluminium.

Bevorzugt verwendet man neben der Aluminiumverbindung noch als weiteren Cokatalysator Elektronendonorverbindungen wie beispielsweise mono- oder polyfunktionelle Carbonsäuren, Carbonsäureanhydride und Carbonsäureester, Ketone, Ether, Alkohole, Lactone, sowie phosphor- und siliciumorganische Verbindungen. Besonders geeignete Elektronendonorverbindungen sind dabei siliciumorganische Verbindungen der allgemeinen Formel (III)

R¹ₙSi(OR²)₄₋ₙ (III)

wobei R¹ gleich oder verschieden ist und eine C₁- bis C₂₀-Alkylgruppe, eine 5- bis 7-gliedrige Cycloalkylgruppe, die ihrerseits eine C₁- bis C₁₀-Alkylgruppe tragen kann, oder eine C₆- bis C₂₀-Aryl- oder Arylalkylgruppe bedeutet, R² gleich oder verschieden ist und eine C₁- bis C₂₀-Alkylgruppe bezeichnet und n für die Zahlen 1, 2 oder 3 steht. Besonders bevorzugt werden dabei solche Verbindungen, in denen R¹ eine C₁- bis C₈-Alkylgruppe oder eine 5-bis 7-gliedrige Cycloalkylgruppe, R² eine C₁- bis C₄-Alkylgruppe und n die Zahlen 1 oder 2 bedeuten.

Unter diesen Verbindungen sind Dimethoxydiisopropylsilan, Dimethoxyisopropylsek.butylsilan, Dimethoxyisobutylisopropylsilan, Dimethoxydiisobutylsilan, Dimethoxydicyclopentylsilan und Diethoxyisobutylisopropylsilan hervorzuheben.

Bevorzugt werden solche Katalysatorsysteme verwendet, bei denen das Atomverhältnis zwischen Aluminium aus der Aluminiumverbindung und Titan aus der titanhaltigen Feststoffkomponente 1:1 bis 800:1, insbesondere 2:1 bis 200:1, und das Molverhältnis zwischen der Aluminiumverbindung und der als Cokatalysator eingesetzten Elektronendonorverbindung 1:1 bis 100:1, insbesondere 2:1 bis 80:1 beträgt. Die Katalysatorbestandteile können in beliebiger Reihenfolge einzeln oder als Gemisch der Komponenten in das Polymerisationssystem eingebracht werden.

Mit Hilfe derartiger Katalysatorsysteme können die in den erfindungsgemäßen, teilvernetzten Kunststoffmassen enthaltenen Polymerisate a₁) hergestellt werden. Nach einem bevorzugten zweistufigen Verfahren wird dabei in der Gasphase zunächst in einer ersten Polymerisationsstufe das Propylencopolymerisat (I), und daran anschließend in einer zweiten Polymerisationsstufe das Propylencopolymerisat (II) produziert.

Die Copolymerisation des Propylens und der entsprechenden C₂-C₁₀-Alk-1-ene wird in der ersten Polymerisationsstufe üblicherweise bei einem Druck von 20 bis 40 bar, einer Temperatur von 60 bis 90°C und einer mittleren Verweilzeit des Reaktionsgemisches von 1 bis 5 Stunden durchgeführt. Bevorzugt sind bei der Herstellung des Propylencopolymerisats (I) Drücke von 25 bis 35 bar, Temperaturen von 65 bis 85°C und mittlere Verweilzeiten von 1,5 bis 4 Stunden. Vorzugsweise wählt man dabei die Reaktionsbedingungen so, daß in dieser ersten Polymerisationsstufe pro mmol der Aluminiumkomponente 0,05 bis 2 kg des Propylencopolymerisats (I) gebildet werden. Als C₂-C₁₀-Alk-1-en wird dabei insbesondere Ethylen und But-1-en, oder ein Gemisch aus diesen Comonomeren verwendet. Zur Herstellung des Propylencopolymerisats (I) wird das Propylen mit den Comonomeren in der Weise copolymerisiert, daß das Verhältnis zwischen dem Partialdruck des Propylens und dem der Comonomeren auf 10:1 bis 1000:1, insbesondere auf 15:1 bis 500:1, eingestellt wird.

Das hierbei gebildete Propylencopolymerisat (I) wird nach Beendigung der Reaktion zusammen mit dem Katalysator aus der ersten Polymerisationsstufe ausgetragen und in die zweite Polymerisationsstufe eingeführt, wo das Propylencopolymerisat (II) hergestellt wird.

Dies erfolgt in der zweiten Polymerisationsstufe dadurch, daß in Anwesenheit des Propylencopolymerisats (I) Propylen zusammen mit einem oder mehreren C₂-C₁₀-Alk-1-enen bei Drücken von 5 bis 25 bar, Temperaturen von 30 bis 80°C und mittleren Verweilzeiten des Reaktionsgemisches von 1 bis 5 Stunden polymerisiert wird. Bevorzugt sind dabei Drücke von 10 bis 20 bar, Temperaturen von 40 bis 70°C und mittlere Verweilzeiten von 1,5 bis 4 Stunden. Üblicherweise liegen dabei die Drücke in der zweiten Polymerisationsstufe um wenigstens 7, vorzugsweise um wenigstens 10 bar unter denen in der ersten Polymerisationsstufe. Als C₂-C₁₀-Alk-1-ene werden dabei insbesondere Ethylen und But-1-en, oder ein Gemisch aus diesen Comonomeren eingesetzt. Zur Herstellung des Copolymerisats (II) wird das Propylen mit den Comonomeren in der Weise copolymerisiert, daß das Verhältnis zwischen dem Partialdruck des Propylens und dem der Comonomeren auf 0,1:1 bis 20:1, insbesondere auf 0,2:1 bis 15:1, eingestellt wird. Durch geeignete Wahl der Polymerisationsparameter sollte außerdem darauf geachtet werden, daß das Gewichtsverhältnis zwischen den in der ersten und den in der zweiten Polymerisationsstufe umgesetzten Monomeren im Bereich von 0,5:1 bis 20:1, insbesondere im Bereich von 0,6:1 bis 10:1, liegt.

Die Schmelzflußindizes der auf diese Weise erhältlichen Polymerisate a₁) liegen im Bereich von 0,1 bis 100, insbesondere im Bereich von 0,5 bis 50 g/10 min, bei 230°C und 2,16 kg, nach DIN 53 735. Der Schmelzflußindex entspricht dabei derjenigen Menge an Polymerisat, die bei 230°C und einem Gewicht von 2,16 kg aus der nach DIN 53 735 genormten Prüfvorrichtung ausgetragen wird.

Weiterhin können die erfindungsgemäßen Kunststoffmassen ein Polymerisat a₂) enthalten, aus 25 bis 97 Gew.-% eines Propylenhomopolymerisats und 3 bis 75 Gew.-% eines Propylencopolymerisats mit einpolymerisierten C₂-C₁₀-Alk-1-enen, wobei der Comonomerengehalt 15 bis 80 Gew.-%, bezogen auf die letztere Komponente beträgt. Bevorzugt sind dabei Kunststoffmassen, deren Polymerisat a₂) aus 35 bis 95 Gew.-% eines Propylenhomopolymerisats und 5 bis 65 Gew.-% eines Propylencopolymerisats besteht, wobei der Comonomerengehalt 20 bis 75 Gew.-%, bezogen auf die letztere Komponente beträgt. Besonders bevorzugte Kunststoffmassen enthalten ein Polymerisat a₂) aus 40 bis 93 Gew.-% eines Propylenhomopolymerisats und 7 bis 60 Gew.-% eines Propylencopolymerisats. In diesem Fall liegt der Comonomerengehalt bei 25 bis 70 Gew.-%, bezogen auf die letztere Komponente. Unter einpolymerisierten C₂-C₁₀-Alk-1-enen sind in diesem Zusammenhang insbesondere Ethylen, But-1-en, Pent-1-en, Hex-1-en, Hept-1-en oder Oct-1-en oder Gemische aus diesen Comonomeren zu verstehen, wobei bevorzugt Ethylen oder But-1-en eingesetzt werden.

Die Herstellung der Polymerisate a₂) erfolgt üblicherweise in den gleichen Reaktoren und nach den gleichen Herstellungsverfahren, wie bereits bei der Herstellung der Polymerisate a₁) beschrieben. In bezug auf die dabei einzusetzenden Ziegler-Natta-Katalysator-systeme sei ebenfalls auf die Herstellung der Polymerisate a₁) verwiesen.

Bei der Herstellung der Polymerisate a₂) wird dabei aus der Gasphase heraus in einer ersten Polymerisationsstufe Propylen polymerisiert und dem daraus erhältlichen Propylenhomopolymerisat in einer zweiten Polymerisationsstufe ein Gemisch aus Propylen und einem oder mehreren C₂-C₁₀-Alk-1-enen hinzupolymerisiert.

Die Polymerisation des Propylens wird in der ersten Polymerisationsstufe bei einem Druck von 20 bis 40 bar, einer Temperatur von 60 bis 90°C und einer mittleren Verweilzeit des Reaktionsgemisches von 1 bis 5 Stunden durchgeführt. Bevorzugt sind dabei Drücke von 20 bis 35 bar, Temperaturen von 65 bis 85°C und mittlere Verweilzeiten von 1,5 bis 4 Stunden. Man wählt die Reaktionsbedingungen vorzugsweise so, daß in der ersten Polymerisationsstufe pro mmol der Aluminiumkomponente 0,05 bis 2 kg, bevorzugt 0,1 bis 1,5 kg, Propylenhomopolymerisat gebildet werden. Zur Molmassenregelung können die bei der Polymerisation von Alk-1-enen üblichen Regler, beispielsweise Wasserstoff mitverwendet werden.

Dieses Propylenhomopolymerisat wird nach Beendigung der Reaktion mit dem Katalysator aus der ersten Polymerisationsstufe ausgetragen und in die zweiten Polymerisationsstufe eingeführt, wo diesem ein Gemisch von Propylen und einem oder mehreren C₂-C₁₀-Alk-1-enen hinzupolymerisiert wird. Der in der zweiten Polymerisationsstufe vorherrschende Druck liegt 7, bevorzugt 10 bar, unter dem der ersten Polymerisationsstufe und beträgt 5 bis 30, vorzugsweise 10 bis 25 bar. Die Temperatur liegt bei 30 bis 100, bevorzugt bei 35 bis 80°C und die mittlere Verweilzeit des Polymerisats beträgt 1 bis 5 Stunden, bevorzugt 1,5 bis 4 Stunden. In dieser zweiten Polymerisationsstufe wird das Verhältnis der Partialdrücke zwischen Propylen und den einpolymerisierten C₂-C₁₀-Alk-1- enen auf 0,1:1 bis 10:1 eingestellt. Durch geeignete Wahl der Reaktionsparameter sollte ferner darauf geachtet werden, daß das Gewichtsverhältnis zwischen den in der ersten und den in der zweiten Polymerisationsstufe umgesetzten Monomeren 0,2:1 bis 20:1, insbesondere 0,4:1 bis 15:1, beträgt.

Weiterhin können die erfindungsgemäßen Kunststoffmassen ein Propylenhomopolymerisat a₃) mit einem Schmelzflußindex von 0,01 bis 100 g/10 min, bei 230°C und unter einem Gewicht von 2,16 kg enthalten. Der Schmelzflußindex entspricht dabei der Menge an Polymerisat, die innerhalb von 10 Minuten aus der nach DIN 53 735 genormten Prüfvorrichtung bei einer Temperatur von 230°C und unter einem Gewicht von 2,16 kg ausgepreßt wird. Besonders bevorzugt sind dabei solche teilvernetzten Kunststoffmassen, deren Propylenhomopolymerisat a₃) einen Schmelzflußindex von 0,1 bis 50 g/10 min, bei 230°C und unter einem Gewicht von 2,16 kg, aufweist.

Die Herstellung der Propylenhomopolymerisate a₃) erfolgt üblicherweise in den gleichen Reaktoren und nach dem gleichen Herstellungsverfahren, wie bereits bei der Herstellung der Polymerisate a₁), beschrieben. In bezug auf die dabei einzusetzenden Ziegler-Natta-Katalysatorsysteme sei ebenfalls auf die Herstellung der Polymerisate a₁) verwiesen.

Die Herstellung der Propylenhomopolymerisate a₃) erfolgt dabei durch Polymerisation von Propylen aus der Gasphase heraus in einem oder mehreren hintereinander geschalteten Reaktoren.

Die Polymerisation des Propylens wird üblicherweise bei einem Druck von 20 bis 40 bar, einer Temperatur von 60 bis 90°C und einer mittleren Verweilzeit des Reaktionsgemisches von 1 bis 5 Stunden durchgeführt. Bevorzugt sind dabei Drücke von 20 bis 35 bar, Temperaturen von 65 bis 85°C und mittlere Verweilzeiten von 1,5 bis 4 Stunden. Man wählt die Reaktionsbedingungen vorzugsweise so, daß pro mmol der Aluminiumkomponente 0,05 bis 2 kg, bevorzugt 0,1 bis 1,5 kg, Propylenhomopolymerisat a₃) gebildet werden. Die Molmasse des Propylenhomopolymerisats a₃) kann durch die in der Polymerisationstechnik gebräuchlichen Regler, beispielsweise Wasserstoff kontrolliert werden. Zur Molmassenregelung werden bei der Polymerisation des Propylens auch gelegentlich geringe Mengen an weiteren C₂-C₁₀-Alk-1-enen, beispielsweise von Ethylen, But-1-en, Pent-1-en oder Hex-1-en eingesetzt. Dies hat zur Folge, daß in dem hergestellten Propylenhomopolymerisat a₃) noch bis zu 0,05 Gew.-%, vorzugsweise bis zu 0,02 Gew.-% an weiteren C₂-C₁₀-Alk-1-enen vorliegen können.

Weiterhin können die erfindungsgemäßen teilvernetzten Kunststoffmassen ein statistisches Propylencopolymerisat a₄) mit einpolymerisierten C₂-C₁₀-Alk-1-enen enthalten, wobei der Comonomerengehalt weniger als 15 Gew.-% beträgt. Bevorzugt sind dabei solche statistischen Propylencopolymerisate a₄), bei denen der Comonomerengehalt weniger als 12 Gew.-% beträgt. Besonders bevorzugte teilvernetzte Kunststoffmassen weisen ein solches statistisches Propylencopolymerisat a₄) auf, dessen Comonomerengehalt im Bereich von 1,0 bis 10 Gew.-% liegt. Unter einpolymerisierten C₂-C₁₀-Alk-1-enen sind in diesem Zusammenhang insbesondere Ethylen, But-1-en, Pent-1-en, Hex-1-en, Hept-1-en oder Oct-1-en oder Gemische aus diesen Comonomeren zu verstehen, wobei bevorzugt Ethylen oder But-1-en eingesetzt werden.

Die Herstellung der erfindungsgemäß zu verwendenden statistischen Propylencopolymerisate a₄) erfolgt üblicherweise in den gleichen Reaktoren und nach den gleichen Herstellungsverfahren, wie bereits bei der Herstellung der Polymerisate a₁) beschrieben. In bezug auf die dabei einzusetzenden Ziegler-Natta-Katalysatorsysteme sei ebenfalls auf die Herstellung der Polymerisate a₁) verwiesen.

Vorzugsweise sind die statistischen Propylencopolymerisate a₄) nach einem ein- oder mehrstufigen Verfahren erhältlich, wobei in der Gasphase Propylen mit einem oder mehreren C₂-C₁₀-Alk-1-enen bei Temperaturen von 60 bis 90°C, Drücken von 20 bis 40 bar und mittleren Verweilzeiten des Reaktionsgemisches von 1 bis 5 Stunden umgesetzt wird. Bevorzugt sind dabei Temperaturen von 65 bis 85°C, Drücke von 20 bis 35 bar und mittlere Verweilzeiten von 1,5 bis 4 Stunden. Üblicherweise liegen dabei die Comonomere Propylen und das oder die C₂-C₁₀-Alk-1-ene in solchen Mengen vor, daß das Partialdruckverhältnis zwischen Propylen und dem oder den C₂-C₁₀-Alk-1-enen 5:1 bis 100:1, insbesondere 5:1 bis 50:1 beträgt. Zur Molmassenregelung können dabei auch Regler wie beispielsweise Wasserstoff eingesetzt werden.

Die auf diese Weise erhältlichen statistischen Propylencopolymerisate a₄) weisen einen Schmelzflußindex von 0,1 bis 100 g/10 min, insbesondere von 0,1 bis 50 g/10 min auf. Der Schmelzflußindex entspricht dabei derjenigen Menge an Polymerisat, die innerhalb von 10 Minuten und bei einer Temperatur von 230°C aus der nach DIN 53 735 genormten Prüfvorrichtung ausgepreßt wird.

Weiterhin erhalten die erfindungsgemäßen, teilvernetzten Kunststoffmassen eine Verbindung der folgenden allgemeinen Formel (I) 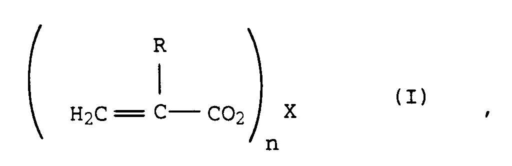
wobei
- R: für Wasserstoff oder für eine C₁-C₄-Alkylgruppe steht,
- X: eine C₁-C₃₀-Alkylgruppe oder eine C₇-C₃₀-Arylalkylgruppe bedeutet, die von einem oder mehreren Sauerstoffatomen und/oder Stickstoffatomen unterbrochen sein kann und
- n: der Zahl 2 oder 3 entspricht.

Bevorzugte Verbindungen b) der allgemeinen Formel (I) sind dabei solche, bei denen R für Wasserstoff, für einen Methylrest oder für einen Ethylrest stehen. Besonders bevorzugte Verbindungen b) enthalten für R Wasserstoff oder einen Methylrest und entsprechen damit Derivaten der Acrylsäure oder der Methacrylsäure.

Es werden insbesondere solche Verbindungen b) der allgemeinen Formel (I) eingesetzt, bei denen X für einen C₂-C₂₀-Alkylrest, insbesondere für einen C₄-C₂₀-Alkylrest steht, der von einem oder mehreren Sauerstoffatomen unterbrochen ist. Beispiele für solche Reste X sind u.a. diejenigen Alkoxyreste, die sich aus folgenden Alkoholen ergeben: Hexandiol, Tripropylenglykol, Dipropylenglykol, Trimethylolpropantriol oder Glycerin. Weiterhin können solche Verbindungen b) verwendet werden, bei denen X für einen C₂-C₂₀-Alkylrest, insbesondere für einen C₄-C₂₀-Alkylrest steht, der von einem oder mehreren Stickstoffatomen sowie gegebenenfalls weiteren Sauerstoffatomen unterbrochen ist. Die Verbindungen b) können auch aus C₇-C₃₀, insbesondere aus C₈-C₂₀-Arylalkylgruppen bestehen, die von einem oder mehreren Sauerstoffatomen und/oder Stickstoffatomen unterbrochen sind. Beispiele für solche Reste X sind u.a. solche Alkoxyreste, die sich aus Phenylglycerin oder Bisphenol-A-diglycerin ergeben.

Die genannten Alkohole werden mit den entsprechenden ungesättigten Carbonsäuren, beispielsweise der Acrylsäure oder der Methacrylsäure nach üblichen Methoden der organischen Chemie zu den entsprechenden ungesättigten Verbindungen b) umgesetzt. Darüber hinaus sind die Verbindungen b) auch im Fachhandel käuflich.

Als Verbindung b) wird insbesondere Trimethylolpropantriacrylat eingesetzt.

Die erfindungsgemäßen, teilvernetzten Kunststoffmassen sind erhältlich durch Umsetzung des Polymerisats a₁),a₂), a₃) oder a₄) mit der Verbindung b) bei Temperaturen von 180 bis 280°C, Drücken von 1 bis 100 bar und mittleren Verweilzeiten des Reaktionsgemisches von 0,2 bis 10 Minuten. Bevorzugt sind dabei Temperaturen von 190 bis 260°C, Drücke von 1 bis 60 bar und mittlere Verweilzeiten von 0,2 bis 5 Minuten. Die Umsetzung der einzelnen Komponenten miteinander erfolgt in den in der Kunststoffverarbeitung üblicherweise zur Vereinigung von Stoffen eingesetzten Apparaturen, beispielsweise in Trommelmischern, in Mühlen, in Schnecken- oder Scheibenextrudern, in Walzwerken oder Knetern.

Die Umsetzung des Polymerisats a₁), a₂), a₃) oder a₄) mit der Verbindung b) zu den erfindungsgemäßen, teilvernetzten Kunststoffmassen kann sowohl in Abwesenheit, als auch in Anwesenheit eines radikalisch zerfallenden Initiators erfolgen.

Als radikalische Initiatoren werden vorzugsweise organische Peroxide oder Azoverbindungen eingesetzt. Bevorzugt werden dabei solche organischen Peroxidverbindungen verwendet, die bei einer Temperatur von 210°C Halbwertszeiten von 1 bis 30 Sekunden aufweisen. Innerhalb dieser Verbindungen sind insbesondere Dicumylperoxid, Monocumyl(tert.-butyl)-peroxid, Di(tert.-butyl)peroxid, 2,5-Dimethyl-2,5-di(tert.-butylperoxy)hexan und 2,5-Dimethyl-2,5-di(tert.-butylperoxy)hexin (3) hervorzuheben.

Zur Herstellung der erfindungsgemäßen, teilvernetzten Kunststoffmassen werden pro 100 Gew.-Teile des Polymerisats a₁), a₂), a₃) oder a₄) in der Regel 0,001 bis 5,0 Gew.-Teile der Verbindung b) und 0 bis 2,0 Gew.-Teile des radikalisch zerfallenden Initiators verwendet. Vorzugsweise werden pro 100 Gew.-Teile des Polymerisats a₁),a₂), a₃) oder a₄) 0,01 bis 2,0 Gew.-Teile, insbesondere 0,02 bis 1,0 Gew.-Teile der Verbindung b) und 0 bis 1,0 Gew.-Teile, insbesondere 0 bis 0,5 Gew.-Teile des radikalisch zerfallenden Initiators eingesetzt.

Die Umsetzung des Polymerisats a₁),a₂), a₃) oder a₄) mit der Verbindung b) erfolgt vorzugsweise in Extrudern, insbesondere in Zweischneckenextrudern. In einer bevorzugten Ausführungsform dosiert man das Polymerisat a₁),a₂), a₃) oder a₄) zusammen mit der Verbindung b) sowie gegebenenfalls dem radikalisch zerfallenden Initiator in den Einzug eines Zweischneckenextruders, wo das Gemisch bei etwa 180 bis 190°C aufgeschmolzen und anschließend bei 180 bis 280°C 0,2 bis 10 Minuten lang zur Reaktion gebracht wird.

Die Verbindung b) sowie gegebenenfalls der radikalisch zerfallende Initiator können auch nach dem Aufschmelzen des Polymerisats a₁),a₂), a₃) oder a₄) in den Extruder gegeben werden.

Nach einem ebenfalls bevorzugten Herstellungsverfahren wird die Verbindung b) sowie gegebenenfalls der radikalisch zerfallende Initiator dem Polymerisat a₁),a₂), a₃) oder a₄) unmittelbar nach dessen Herstellung in einer, an den Herstellungsreaktor angeschlossenen Mischapparatur hinzugesetzt. Als Mischapparaturen werden dabei insbesondere Extruder verwendet.

Die erfindungsgemäßen teilvernetzten Kunststoffmassen zeichnen sich u.a. durch eine hohe mechanische Festigkeit, insbesondere eine hohe Dehnverfestigung, sowie eine verbesserte Bindenahtfestigkeit aus. Im Gegensatz zu vollständig vernetzten Kunststoffen können die erfindungsgemäßen teilvernetzten Kunststoffmassen noch gut verarbeitet werden.

Die erfindungsgemäßen teilvernetzten Kunststoffmassen eignen sich aufgrund ihrer guten Verarbeitbarkeit insbesondere als Materialien für den Spritzguß, das Blasformen, die Extrusion und die Herstellung von Schäumen. Sie können dabei u.a. zur Herstellung von Folien, Fasern und Formkörpern verwendet werden.

### Beispiele

In den Beispielen 1 und 2 sowie dem Vergleichsbeispiel A wurde jeweils eine Vorrichtung verwendet, die
- aus einer Kaskade von zwei verschiedenen, gerührten Autoklaven, die beide das gleiche Nutzvolumen von 200 l aufwiesen und jeweils mit einem bewegten Festbett aus feinteiligem Polypropylen gefüllt waren,
- sowie einem sich daran anschließenden Zweischneckenextruder "ZSK 57" der Firma Werner & Pfleiderer mit einem Längen/Durchmesserverhältnis von 27 bestand. Der Extruder konnte bei einer Schneckendrehzahl von 100 bis 300 Umdrehungen betrieben werden.

Die dabei verwendeten Polymerisate a₁) wurden als Grieß oder als Granulat dem Zweischneckenextruder zugeführt und dort mit der Verbindung b) und dem radikalischen Initiator aufgeschmolzen.

### Beispiel 1

Aus dem letzten Autoklaven der Kaskade wurde ein Polymerisat a₁) ausgetragen, welches aus 58 Gew.-% eines Propylen-Ethylen-Copolymerisats (I) mit 3,8 Gew.-% einpolymerisiertem Ethylen und 42 Gew.-% eines Propylen-Ethylen-Copolymerisats (II) mit 60 Gew.-% einpolymerisiertem Ethylen bestand und einem Schmelzflußindex von 1,0 g/10 min [bei 230°C und 2,16 kg, nach DIN 53 735] aufwies. Dieses wurde im Zweischneckenextruder mit 0,4 Gew.-Teilen Hexandioldiacrylat b) und 0,02 Gew.-Teilen 2,5-Dimethyl-2,5-di-(tert.-butyl-peroxy)hexan vermischt und granuliert. Die Temperatur betrug dabei 240°C, der Druck 20 bar und die mittlere Verweilzeit 30 Sekunden. Danach wurde das Gemisch aus dem Zweischneckenextruder ausgetragen und granuliert. Das erhaltene Produkt war farblos und geruchlos.

Der Schmelzflußindex, die Dehnung bei Streckspannung, der Gelgehalt und die Reißdehnung der dabei erhaltenen Kunststoffmasse können der nachfolgenden Tabelle entnommen werden.

### Beispiel 2

100 Gew.-Teile des im Beispiel 1 verwendeten Propylenpolymerisats a₁) wurden unter den gleichen Bedingungen wie im Beispiel 1 mit 0,6 Gew.-Teilen Hexandioldiacrylat b) und 0,02 Gew.-Teilen 2,5-Dimethyl-2,5-di-(tert.-butylperory)hexan vermischt und entsprechend aufgearbeitet. Das erhaltene Produkt war farblos und geruchlos.

Der Schmelzflußindex, die Dehnung bei Streckspannung, der Gelgehalt und die Reißdehnung der dabei erhaltenen Kunststoffmasse können der nachfolgenden Tabelle entnommen werden.

### Vergleichsbeispiel A

Unter den Bedingungen des Beispiels 1 wurden 100 Gew.-Teile des im Beispiel 1 verwendeten Propylencopolymerisats a₁) ohne Zusatz einer Acrylates b) und eines Peroxids aufgearbeitet.

Der Schmelzflußindex, die Dehnung bei Streckspannung, der Gelgehalt und die Reißdehnung der dabei erhaltenen Kunststoffmasse können der nachfolgenden Tabelle entnommen werden.

**Tabelle**

| | Beispiel | 1 Beispiel | 2 Vergleichsbeispiel A |
|---|---|---|---|
| Schmelzflußindex^{a)} [g/10 min] | 7,1 | 6,9 | 1,8 |
| Dehnung bei Streckspannung ^{b)} - mit Bindenaht - | 4,3 | 10,2 | 3,3 |
| Reißdehnung ^{b)} - mit Bindenaht - | 4,6 | 16,8 | 3,9 |
| Gelgehalt ^{c)} [%] | 0 | 0 | 0 |

| | | | |
|---|---|---|---|
| a) analog DIN 53 735, bei 230°C und unter einem Gewicht von 2,16 kg | | | |
| b) Zur Dehnungsprüfung mit Bindenaht wurden zweiseitige angespritzte Schulterstäbe hergestellt, die in der Mitte eine Bindenaht quer zur Längsachse aufwiesen. Der Schulterstab entsprach dabei in seinen Abmessungen dem Normalschulterstab Typ 1 nach ISO 527 und besaß eine Dicke von 3 mm. Die Herstellung dieses Schulterstabs erfolgte bei einer Temperatur von 250°C und einer Fließfrontgeschwindigkeit von 200 mm/sec. An den auf diese Weise hergestellten Schulterstäben wurden durch Zugexperimente nach DIN 53 457 bei 23°C die Dehnung bei Streckspannung und die Reißdehnung, jeweils mit Bindenaht, bestimmt. | | | |
| c) Die Bestimmung des Gelgehalts erfolgte durch Extraktion in siedendem p-Xylol. Dazu wurden ca. 2 g des Polymerisats in eine Soxhlet-Extraktionshülse eingewogen und es wurde 24 Stunden lang extrahiert. Der nach dem Trocknen in der Hülse verbleibende unlösliche Anteil entspricht dem Gelgehalt. | | | |

Die Beispiele 3 bis 6 sowie das Vergleichsbeispiel B wurden in einem Zweischneckenextruder ZSK 57 der Firma Werner Pfleiderer mit einem Länge/Durchmesser-Verhältnis von 27 durchgeführt. Die dabei verwendeten Polymerisate a₂) wurden als Grieß oder als Granulate dem Zweischneckenextruder zugeführt und dort mit der jeweils eingesetzten Verbindung b) und dem radikalischen Initiator aufgeschmolzen.

### Beispiel 3

100 Gew.-Teile eines Propylenpolymerisats a₂) mit 55 Gew.-% Propylenhomopolymerisat, 45 Gew.-% Propylen-Ethylencopolymerisat [bestimmt durch Extraktionsfraktionierung nach W. Holtrup, Makromol. Chem. 178, 2335 (1977)], einem Ethylengehalt von 53,5 Gew.-%, bezogen auf die letztere Komponente [bestimmt durch Infrarotspektroskopie] und einem Schmelzflußindex von 2,2 g/10 min [bei 230°C und 2,16 kg, nach DIN 53735] wurden im Zweischneckenextruder mit 0,2 Gew.-Teilen Hexandioldiacrylat b) und 0,08 Gew.-Teilen 2,5-Dimethyl-2,5-di-(tert.-butylperoxy)hexan vermischt und granuliert. Die Temperatur betrug dabei 240°C, der Druck 20 bar und die mittlere Verweilzeit 30 Sekunden. Danach wurde das Gemisch aus dem Zweischneckenextruder ausgetragen und granuliert. Das erhaltene Produkt war farblos und geruchlos.

Der Schmelzflußindex, die Dehnung bei Streckspannung und die Reißdehnung der dabei erhaltenen Kunststoffmasse können der nachfolgenden Tabelle entnommen werden.

### Beispiel 4

100 Gew.-Teile des im Beispiel 3 verwendeten Propylenpolymerisats a₂) wurden unter den gleichen Bedingungen wie im Beispiel 1 mit 0,4 Gew.-Teilen Hexandioldiacrylat b) und 0,08 Gew.-Teilen 2,5-Dimethyl-2,5-di-(tert.-butylperoxy)hexan vermischt und entsprechend aufgearbeitet. Das erhaltene Produkt war farblos und geruchlos.

Der Schmelzflußindex, die Dehnung bei Streckspannung und die Reißfestigkeit der dabei erhaltenen Kunststoffmassen können der nachfolgenden Tabelle entnommen werden.

### Beispiel 5

100 Gew.-Teile des im Beispiel 3 verwendeten Propylenpolymerisats a₂) wurden unter den gleichen Bedingungen wie im Beispiel 1 mit 0,3 Gew.-Teilen Tripropylenglykoldiacrylat b) und 0,08 Gew.-Teilen 2,5-Dimethyl-2,5-di-(tert.-butylperoxy)hexan vermischt und entsprechend aufgearbeitet. Das erhaltene Produkt war farblos und geruchlos.

Der Schmelzflußindex, die Dehnung bei Streckspannung und die Reißdehnung der dabei erhaltenen Kunststoffmasse können der nachfolgenden Tabelle entnommen werden.

### Beispiel 6

100 Gew.-Teile des im Beispiel 3 verwendeten Propylenpolymerisats a₂) wurden unter den gleichen Bedingungen wie im Beispiel 1 mit 0,4 Gew.-Teilen Tripropylenglykoldiacrylat b) und 0,08 Gew.-Teilen 2,5-Dimethyl-2,5-di-(tert.-butylperoxy)hexan vermischt und entsprechend aufgearbeitet. Das erhaltene Produkt war farblos und geruchlos.

Der Schmelzflußindex, die Dehnung bei Streckspannung und die Reißdehnung der dabei erhaltenen Kunststoffmasse können der nachfolgenden Tabelle entnommen werden.

### Vergleichsbeispiel B

Unter den Bedingungen des Beispiels 3 wurden 100 Gew.-Teile des im Beispiel 3 verwendeten Propylenpolymerisats a₂) ohne Zusatz eines Acrylates b) und eines Peroxids aufgearbeitet.

Der Schmelzflußindex, die Dehnung bei Streckspannung und die Reißdehnung der dabei erhaltenen Kunststoffmasse können der nachfolgenden Tabelle entnommen werden.

**Tabelle**

| | Bsp. 3 | Bsp. 4 | Bsp. 5 | Bsp. 6 | Vgl.Bsp. B |
|---|---|---|---|---|---|
| Schmelzflußindex^{a)} [g/10 min] | 18.8 | 7,7 | 21,6 | 8,7 | 2,8 |
| Dehnung bei Streckspannung^{b)} - mit Bindenaht - | 7,2 | 7,6 | 6,1 | 7,2 | 3,4 |
| Reißdehnung^{b)} - mit Bindenaht - | 21,0 | 125 | 8,5 | 15,2 | 5,9 |
| Gelgehalt^{c)} [%] | 0 | 0 | 0 | 0 | 0 |

| | | | | | |
|---|---|---|---|---|---|
| a) analog DIN 53 735, bei 230°C und unter einem Gewicht von 2,16 kg | | | | | |
| b) Zur Dehnungsprüfung mit Bindenaht wurden zweiseitig angespritzte Schulterstäbe hergestellt, die in der Mitte eine Bindenaht quer zur Längsachse aufwiesen. Der Schulterstab entsprach dabei in seinen Abmessungen dem Normalschulterstab Typ 1 nach ISO 527 und besaß eine Dicke von 3 mm. Die Herstellung dieses Schulterstabs erfolgte bei einer Temperatur von 250°C und einer Fließfrontgeschwindigkeit von 200 mm/sec. An den auf diese Weise hergestellten Schulterstäben wurden durch Zugexperimente nach DIN 53 457 bei 23°C die Dehnung bei Streckspannung und die Reißdehnung, jeweils mit Bindenaht, bestimmt. | | | | | |
| c) Bestimmut durch Extraktion in siedendem p-Xylol. Dazu wurden ca. 2 g des Polymerisats in eine Soxhlet-Extraktionshülse eingewogen und es wurde 24 Stunden lang extrahiert. Der nach dem Trocknen in der Hülse verbleibende unlösliche Anteil entspricht dem Gelgehalt. | | | | | |

Die Beispiele 7 bis 9 sowie die Vergleichsbeispiele C und D wurden in einem Zweischneckenextruder ZSK 57 der Firma Werner & Pfleiderer mit einem Länge/Durchmesser-Verhältnis von 27 durchgeführt. Die dabei verwendeten Propylenhomopolymerisate a₃) bzw. statistischen Propylencopolymerisate a₄) wurden als Grieß oder als Granulat dem Zweischneckenextruder zugeführt und dort mit der Verbindung b) und dem radikalischen Initiator aufgeschmolzen.

### Beispiel 7

100 Gew.-Teile eines Propylenhomopolymerisats a₃) mit einem Schmelzflußindex von 2,0 g/10 min, bei 230°C und 2,16 kg, nach DIN 53 735 wurden im Zweischneckenextruder mit 0,8 Gew.-Teilen Hexandioldiacrylat b) und 0,01 Gew.-Teilen 2,5-Dimethyl-2,5-di-(tert.-butylperoxy)-hexan vermischt und granuliert. Die Temperatur betrug dabei 240°C und die mittlere Verweilzeit 30 Sekunden. Danach wurde das Gemisch aus dem Zweischneckenextruder ausgetragen und granuliert. Das dabei erhaltene Produkt war farb- und geruchlos und wies einen Schmelzflußindex von 2,3 g/10 min, bei 230°C und 2,16 kg, nach DIN 53 735 auf.

### Beispiel 8

100 Gew.-Teile des im Beispiel 7 verwendeten Propylenhomopolymerisats a₃) wurden unter den Bedingungen des Beispiels 7 mit 0,6 Gew.-Teilen Hexandioldiacrylat b) und 0,01 Gew.-Teilen 2,5-Dimethyl-2,5-di(tert.-butylperoxy)-hexan vermischt und entsprechend aufgearbeitet. Das dabei erhaltene Produkt farb- und geruchlos und wies einen Schmelzflußindex von 2,6 g/10 min, bei 230°C und 2,16 kg, nach DIN 53 735 auf.

### Vergleichsbeispiel C

100 Gew.-Teile des im Beispiel 7 verwendeten Propylenhomopolymerisats a₃) wurden unter den Bedingungen des Beispiels 7 ohne Zusatz eines Acrylates und ohne Peroxidverbindung aufgearbeitet. Das erhaltene Produkt war farb- und geruchlos und wies einen Schmelzflußindex von 2,1 g/10 min, bei 230°C und 2,16 kg, nach DIN 53 735 auf.

### Beispiel 9

100 Gew.-Teile eines statistischen Propylencopolymerisats a₄) mit einem Schmelzflußindex von 2,0 g/10 min, bei 230°C und 2,16 kg, nach DIN 53 735 und 2,5 Gew.-% einpolymerisiertem Ethylen [bestimmt durch Fourier-Infrarotspektroskopie] wurden im Zweischneckenextruder mit 0,8 Gew.-Teilen Hexandioldiacrylat b) und 0,01 Gew.-Teilen 2,5-Dimethyl-2,5-di-(tert.-butylperoxy)-hexan vermischt und granuliert. Die Temperatur betrug dabei 240°C und die mittlere Verweilzeit 30 Sekunden. Danach wurde das Gemisch aus dem Zweischneckenextruder ausgetragen und granuliert. Das dabei erhaltene Produkt war farb- und geruchlos und wies einen Schmelzflußindex von 2,8 g/10 min, bei 230°C und 2,16 kg, nach DIN 53 735 auf.

### Vergleichsbeispiel D

100 Gew.-Teile des im Beispiel 9 verwendeten Propylencopolymerisats a₄) wurden unter den Bedingungen des Beispiels 9 ohne Zusatz einer Verbindung b) und ohne Peroxid aufgearbeitet. Das dabei erhaltene Produkt war farb- und geruchlos und wies einen Schmelzflußindex von 2,1 g/10 min, bei 230°C und 2,16 kg, nach DIN 53735 auf.

Der Schmelzflußindex, der Gelgehalt und der Seiteneinsprung der nach den erfindungsgemäßen Beispielen 7 bis 9 und der nach den Vergleichsbeispielen C und D erhaltenen Kunststoffmassen können der nachfolgenden Tabelle entnommen werden.

**Tabelle**

| | Bsp. 7 | Bsp. 8 | Bsp. 9 | Vgl.Bsp. C | Vgl.Bsp. D |
|---|---|---|---|---|---|
| Schmelzflußindex ^{a)} [g/10 min] | 2.3 | 2,6 | 2,8 | 2,1 | 2,1 |
| Gelgehalt ^{b)} [%] | 0 | 0 | 0 | 0 | 0 |
| Seiteneinsprung ^{c)} | 90 | 100 | 85 | 140 | 130 |

| | | | | | |
|---|---|---|---|---|---|
| a) analog DIN 53 735, bei 230°C und unter einem Gewicht von 2,16 kg | | | | | |
| b) Die Bestimmung des Gelgehalts erfolgte durch Extraktion in siedendem p-Xylol. Dazu wurden 2 g des Polymerisats in eine Soxhlet-Extraktionshülse eingewogen und 24 Stunden lang extrahiert. Der nach dem Trocknen in der Hülse verbleibende unlösliche Teil entspricht dem Gelgehalt. | | | | | |
| c) Zur Bestimmung des Seiteneinsprungs wurden in einem Barmag-Extruder (90 mm Zylinderdurchmesser; 800 mm Breitschlitzdüse) bei einem Durchsatz von 40 kg Polymer pro Stunde und einer Abzugsgeschwindigkeit von 70 m/min Folien einer Dicke von 14 Nm hergestellt. Der Seiteneinsprung ergab sich aus der Differenz zwischen Folienbreite und Düsenbreite. Für eine gute Verarbeitbarkeit von Polymeren ist ein möglichst geringer Seiteneinsprung erwünscht. | | | | | |

Die Beispiele 10 bis 13 und die Vergleichsbeispiele E und F wurden in einem Zweischneckenextruder ZSK 57 der Firma Werner & Pfleiderer mit einem Länge/Durchmesser-Verhältnis von 27 durchgeführt. Die dabei verwendeten Propylene wurden als Grieß oder als Granulat dem Zweischneckenextruder zugeführt und dort mit Trimethylolpropantriacrylat und dem radikalischen Initiator aufgeschmolzen.

Zur Charakterisierung der Produkte wurden folgende Prüfungen durchgeführt:

Der Schmelzflußindex wurde analog DIN 53 735 bei 230°C unter einem Gewicht von 2,16 kg bestimmt.

Es wurden Dehnungsprüfungen mit Bindenaht durchgeführt. Dazu wurden zweiseitig angespritzte Schulterstäbe hergestellt, die in der Mitte eine Bindenaht quer zur Längsachse aufwiesen. Die Schulterstäbe entsprachen dabei in ihren Abmessung dem Normalschulterstab Typ 1 nach ISO 527 und besaßen eine Dicke von 3 mm. Die Herstellung der Schulterstäbe erfolgte bei einer Temperatur von 250°C und einer Fließfrontgeschwindigkeit von 200 mm/s. An den auf diese Weise hergestellten Schulterstäben wurden durch Zugexperimente nach DIN 53 457 bei 23°C die Dehnung bei Streckspannung und die Reißdehnung, jeweils mit Bindenaht, bestimmt.

Der Gelgehalt wurde durch Extraktion mit siedendem p-Xylol ermittelt. Dazu wurden ca. 2 g des Polymerisats in eine Soxphlet-Extraktionshülse eingewogen und es wurde 24 Stunden lang extrahiert. Der nach dem Trocknen in der Hülse verbliebene unlösliche Anteil entspricht dem Gelgehalt.

### Beispiel 10

100 Gew.-Teile eines Propylenhomopolymerisats a₃) mit einem Schmelzflußindex von 2,0 g/10 min, bei 230°C und 2,16 kg, nach DIN 53 735 wurden im Zweischneckenextruder mit 0,6 Gew.-Teilen Trimethylolpropantriacrylat und 0,01 Gew.-Teilen 2,5-Dimethyl-2,5-di-(tert.-butylperoxy)-hexan vermischt und granuliert. Die Temperatur betrug dabei 240°C und die mittlere Verweilzeit 30 Sekunden. Danach wurde das Gemisch aus dem Zweischneckenextruder ausgetragen und granuliert. Das dabei erhaltene Produkt war farb- und geruchlos. Die gemessenen Produkteigenschaften sind in der nachfolgenden Tabelle aufgeführt.

### Vergleichsbeispiel E

Das Beispiel 10 wurde unter ansonsten analogen Bedingungen wiederholt, wobei aber auf die Zugabe von Trimethylolpropantriacrylat verzichtet wurde. Das dabei erhaltene Produkt wurde untersucht. Die gemessenen Produkteigenschaften sind in der nachstehenden Tabelle aufgeführt.

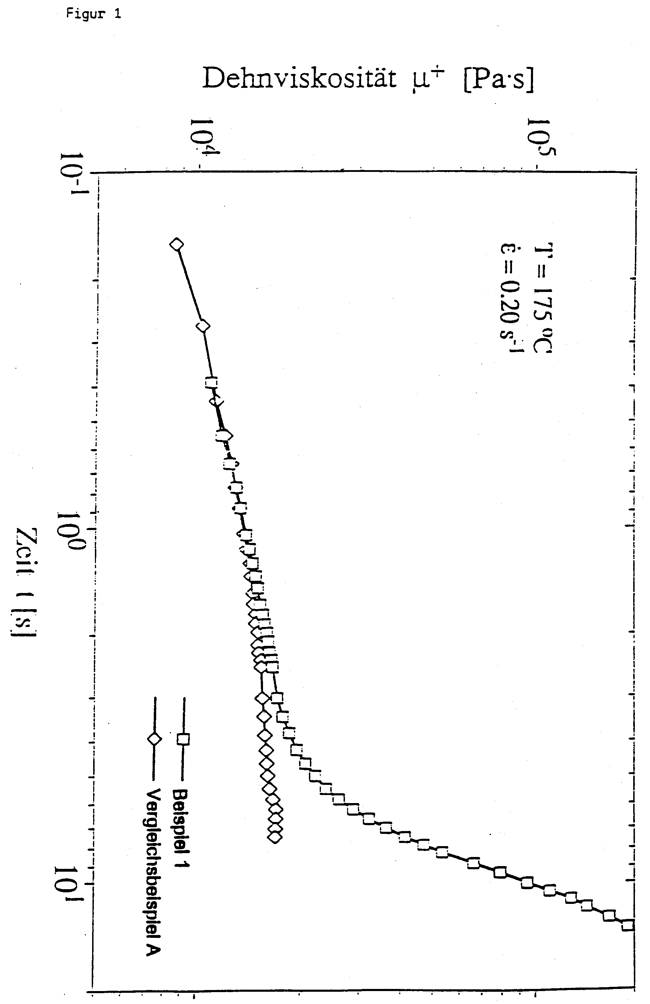

Zur Beurteilung der Schmelzefestigkeit der bei dem Beispiel 10 und dem Vergleichsbeispiel E erhaltenen Produkte wurde ferner jeweils die Dehnverfestigung bestimmt. Dies erfolgte mit Hilfe eines bei der BASF Aktiengesellschaft entwickelten Dehnrheometers [H. Münstedt, J. Rheol. 23 (1979), 421-36]. Dabei wurden zylindrische Proben der zu vermessenden Produkte mit einem Durchmesser von 6 mm und einer Länge von ca. 20 mm, welche man zwischen Aluminiumhalterungen einbrachte, verstreckt. Die Versuche wurden bei einer konstanten Dehngeschwindigkeit von 0,20 s⁻¹ und einer Temperatur von 175°C durchgeführt. Die auf diese Weise erhaltene Dehnverfestigung ist für das erfindungsgemäße Beispiel ebenso wie für das Vergleichsbeispiel E in der nachstehenden Figur 1 aufgeführt.

Die Figur 1 zeigt, daß bei hoher Dehnung bei dem Produkt des erfindungsgemäßen Beispiels 10 eine Verfestigung der Schmelze auftritt, die man bei dem Produkt des Vergleichsbeispiels E nicht beobachtet.

### Beispiel 11

100 Gew.-Teile eines Polypropylens a₁), welches aus 58 Gew.-% eines Propylen-Ethylen-Copolymerisats (I) mit 3,8 Gew.-% einpolymerisiertem Ethylen und 42 Gew.-% eines Propylen-Ethylen-Copolymerisats (II) mit 60 Gew.-% einpolymerisiertem Ethylen bestand und einem Schmelzflußindex von 5,0 g/10 min [bei 230°C und 2,16 kg, nach DIN 53 735] aufwies, wurden im Zweischneckenextruder mit 0,6 Gew.-Teilen Trimethylolpropantriacrylat und 0,03 Gew.-Teilen 2,5-Dimethyl-2,5-di(tert.)-butylperoxy)hexan vermischt und mittels eines Zweischneckenextruders granuliert. Die Temperatur betrug dabei 240°C, der Druck 20 bar und die mittlere Verweilzeit 30 Sekunden. Das erhaltene Produkt war farblos und geruchlos.

Die Prüfergebnisse können der nachfolgenden Tabelle entnommen werden.

### Beispiel 12

Beispiel 11 wurde wiederholt, es wurden jedoch 0,4 Gew.-Teile Trimethylolpropantriacrylat und 0,08 Gew.-Teile 2,5-Dimethyl-2,5-di-(tert.-butylperoxy)hexan eingesetzt.
Die Prüfergebnisse sind ebenfalls in der nachfolgenden Tabelle aufgeführt.

### Vergleichsbeispiel F

Das Beispiel 12 wurde unter ansonsten analogen Bedingungen wiederholt, wobei aber auf die Zugabe von Trimethylolpropantriacrylat verzichtet wurde. Es wurde ferner ohne Peroxid gearbeitet. Die gemessenen Produkteigenschaften sind der nachstehenden Tabelle zu entnehmen.

### Beispiel 13

100 Gew.-Teile eines Propylenpolymerisats a₂) aus 55 Gew.-% Propylenhomopolymerisat und 45 Gew.-% Propylen-Ethylen-Copolymerisat [bestimmt durch Extraktionsfraktionierung nach W. Holtrup, Makromol. Chem. 178, 2335 (1977)], einem Ethylengehalt von 53,5 Gew.-%, bezogen auf die letztere Komponente [bestimmt durch Infrarotspektroskopie] und einem Schmelzflußindesx von 2,2 g/10 min [bei 230°C und 2,16 kg, nach DIN 53 735], wurden im Zweischneckenextruder mit 0,6 Gew.-Teilen Trimethylolpropantriacrylat und 0,01 Gew.-Teilen 2,5-Dimethyl-2,5-di(tert.)-butylperoxy)hexan vermischt und granuliert. Die Temperatur betrug dabei 240°C, der Druck 20 bar und die mittlere Verweilzeit 30 Sekunden. Danach wurde das Gemisch aus dem Zweischneckenextruder ausgetragen und granuliert. Das erhaltene Produkt war farblos und geruchlos.

Der Schmelzflußindex, die Dehnung bei Streckspannung, der Gelgehalt und die Reißdehnung der dabei erhaltenen Kunststoffmasse können der nachfolgenden Tabelle entnommen werden.

**Tabelle**

| | Bsp. 10 | Vergl. Bsp. E | Bsp. 11 | Bsp. 12 | Vergl. Bsp. F | Bsp. 13 |
|---|---|---|---|---|---|---|
| Schmelzflußindex [g/10 min] | 5,9 | 6,4 | 6,1 | 17,0 | 6,1 | 2,2 |
| Gelgehalt [%] | 0 | 0 | 0 | 0 | 0 | 0 |
| Dehnung bei Streckspannung - mit Bindenaht - | - | - | 14,2 | 13,9 | 5,7 | 12,4 |
| Reißdehnung - mit Bindenaht - | - | - | 193 | 110 | 6 | >400 |

## Patentansprüche

1. Teilvernetzte Kunststoffmassen mit einem Schmelzflußindex von 0,1 bis 100 g/10 min., bei 230°C und unter einem Gewicht von 2,16 kg, aus
a₁) einem Polymerisat aus 25 bis 97 Gew.-% eines Propylencopolymerisats (I), das 0,1 bis 15 Gew.-% an einpolymerisierten C₂-C₁₀-Alk-1-enen enthält und aus 3 bis 75 Gew.-% eines weiteren Propylencopolymerisats (II), das 15 bis 80 Gew.-% einpolymerisierte C₂-C₁₀-Alk-1-ene aufweist, oder
a₂) einem Polymerisat aus 25 bis 97 Gew.-% eines Propylenhomopolymerisats und 3 bis 75 Gew.-% eines Propylencopolymerisats mit einpolymerisierten C₂-C₁₀-Alk-1-enen, wobei der Comonomerengehalt 15 bis 80 Gew.-%, bezogen auf die letztere Komponente beträgt, oder
a₃) einem Propylenhomopolymerisat mit einem Schmelzflußindex von 0,01 bis 100 g/10 min, bei 230°C und unter einem Gewicht von 2,16 kg oder
a₄) einem statistischen Propylencopolymerisat mit einpolymerisierten C₂-C₁₀-Alk-1-enen, wobei der Comonomerengehalt weniger als 15 Gew.-% beträgt und
b) einer Verbindung der folgenden allgemeinen Formel (I) 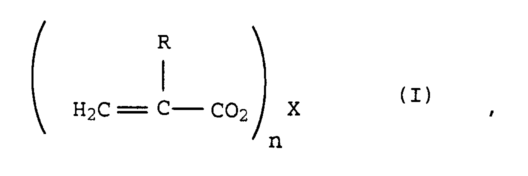 wobei
R für Wasserstoff oder für eine C₁-C₄-Alkylgruppe steht,
X eine C₁-C₃₀-Alkylgruppe oder eine C₇-C₃₀-Arylalkylgruppe bedeutet, die von einem oder mehreren Sauerstoffatomen und/oder Stickstoffatomen unterbrochen sein kann und
n der Zahl 2 oder 3 entspricht,
erhältlich durch Umsetzung des Polymerisats a₁), a₂), a₃) oder a₄) mit der Verbindung b) bei Temperaturen von 180 bis 280°C, Drücken von 1 bis 100 bar und mittleren Verweilzeiten des Reaktionsgemisches von 0,2 bis 10 Minuten.

2. Teilvernetzte Kunststoffmassen nach Anspruch 1, erhältlich durch Umsetzung des Polymerisats a₁), a₂), a₃) oder a₄) mit der Verbindung b) in Anwesenheit eines radikalisch zerfallenden Initiators.

3. Teilvernetzte Kunststoffmassen nach den Ansprüchen 1 oder 2, wobei man pro 100 Gew.-Teile des Polymerisats a₁), a₂), a₃) oder a₄) 0,001 bis 5,0 Gew.-Teile der Verbindung b) und 0 bis 2 Gew.-Teile des radikalisch zerfallenden Initiators verwendet.

4. Teilvernetzte Kunststoffmassen nach den Ansprüchen 1 bis 3, wobei solche Verbindungen b) der Formel (I) verwendet werden, in der R die folgende Bedeutung hat: Wasserstoff, Methylrest, Ethylrest.

5. Teilvernetzte Kunststoffmassen nach den Ansprüchen 1 bis 4, wobei solche Verbindungen b) der Formel (I) verwendet werden, in der X für einen C₂-C₂₀-Alkylrest steht, der von einem oder mehreren Sauerstoffatomen unterbrochen ist.

6. Teilvernetzte Kunststoffmassen nach den Ansprüchen 2 bis 5, wobei als radikalisch zerfallende Initiatoren organische Peroxide oder Azoverbindungen verwendet werden.

7. Teilvernetzte Kunststoffmassen nach den Ansprüchen 1 bis 6, wobei als Verbindung b) Trimethylolpropantriacrylat verwendet wird.

8. Teilvernetzte Kunststoffmassen nach den Ansprüchen 1 bis 7, wobei das Polymerisat a₁) verwendet wird.

9. Teilvernetzte Kunststoffmassen nach den Ansprüchen 1 bis 7, wobei das Polymerisat a₂) verwendet wird.

10. Teilvernetzte Kunststoffmassen nach den Ansprüchen 1 bis 7, wobei das Propylenhomopolymerisat a₃) verwendet wird.

11. Teilvernetzte Kunststoffmassen nach den Ansprüchen 1 bis 7, wobei das statistische Propylencopolymerisat a₄) verwendet wird.

12. Verfahren zur Herstellung von teilvernetzten Kunststoffmassen gemäß den Ansprüchen 1 bis 11, dadurch gekennzeichnet, daß man die Umsetzung des Polymerisats a₁), a₂), a₃) oder a₄) mit der Verbindung b) bei Temperaturen von 190 bis 260°C, Drücken von 1 bis 60 bar und mittleren Verweilzeiten des Reaktionsgemisches von 0,2 bis 5 Minuten durchführt.

13. Verfahren zur Herstellung von teilvernetzten Kunststoffmassen nach Anspruch 12, dadurch gekennzeichnet, daß man die Verbindung b) mit dem Polymerisat a₁), a₂), a₃) oder a₄) unmittelbar nach dessen Herstellung in einer, an den Herstellungsreaktor angeschlossenen Mischapparatur umsetzt.

14. Folien, Fasern und Formkörper aus den teilvernetzten Kunststoffmassen gemäß den Ansprüchen 1 bis 11.
